(19) **Europäisches Patentamt European Patent Office Office européen des brevets**

(11) **EP 3 646 255 B1**

(12) **FASCICULE DE BREVET EUROPEEN**

(45) Date de publication et mention de la délivrance du brevet:
**20.03.2024 Bulletin 2024/12**

(21) Numéro de dépôt: **18742713.3**

(22) Date de dépôt: **29.06.2018**

(51) Classification Internationale des Brevets (IPC):
**G06Q 10/04** *(2023.01)* **G06Q 50/04** *(2012.01)*

(52) Classification Coopérative des Brevets (CPC):
**G06Q 10/04; G06Q 50/04;** Y02P 90/30

(86) Numéro de dépôt international:
**PCT/EP2018/067656**

(87) Numéro de publication internationale:
**WO 2019/002582 (03.01.2019 Gazette 2019/01)**

(54) **SYSTÈME ET PROCÉDÉ DE GESTION DE RISQUES DANS UN PROCESSUS**

SYSTEM UND VERFAHREN ZUR VERWALTUNG VON RISIKEN IN EINEM PROZESS

SYSTEM AND METHOD FOR MANAGING RISKS IN A PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2017 FR 1756066**

(43) Date de publication de la demande:
**06.05.2020 Bulletin 2020/19**

(73) Titulaire: **Worldline**
**92800 Puteaux (FR)**

(72) Inventeurs:
• **DE STEFANI, Jacopo**
**1160 Auderghem (BE)**
• **BONTEMPI, Gianluca**
**1950 Kraainem (BE)**
• **CAELEN, Olivier**
**1040 Etterbeek (BE)**
• **HATTAB, Dalila**
**59147 Gondecourt (FR)**

(74) Mandataire: **IP Trust**
**2, rue de Clichy**
**75009 Paris (FR)**

(56) Documents cités:
**EP-A1- 2 172 888 US-A1- 2013 063 264**
**US-A1- 2016 148 107**

**Description**

DOMAINE TECHNIQUE DE L'INVENTION

La présente invention se rapporte au domaine de la surveillance de processus et plus précisément à un système et une méthode de supervision des risques dans lesdits processus. Un tel système pourrait être appliqué au contrôle des processus industriels ou aux prévisions météorologiques ou économiques.

ARRIERE-PLAN TECHNOLOGIQUE DE L'INVENTION

L'efficacité énergétique ou économique, par exemple, d'une chaîne de production d'un processus industriel peut être affectée lorsqu'au moins un élément de ladite chaîne de production est défaillant au cours dudit processus. Cette perte d'efficacité peut être encore plus dommageable lorsque ladite chaîne de production est complexe.

Par exemple et de manière non limitative, les avancées en matière de technologie dans le domaine de la production d'énergie nucléaire augmente la complexité et les facteurs de risque car l'installation de production d'énergie nucléaire et les réacteurs nucléaires utilisent des éléments hautement explosifs et radioactifs et peuvent exiger un contrôle très précis en temps réel.

Afin d'éviter de tels inconvénients, l'on doit pouvoir contrôler, en temps réel, au moins chaque étape ou élément pertinent de ladite ligne de production industrielle.

Le document EP 2 172 888 A1 décrit un système de contrôle de risques dans un processus industriel, et notamment sur une chaîne de production, basé sur un module de prédiction et émettant des alertes et des recommendations ou ajustant automatiquement les paramètres du processus.

DESCRIPTION GENERALE DE L'INVENTION

La présente invention a pour but de pallier certains inconvénients de l'art antérieur en proposant un moyen de supervision de processus dans une chaîne de production industrielle.

Ce but est atteint par un système selon la revendication 1.

D'autres particularités et avantages de ce système sont définies dans les revendications dépendantes de la revendication 1.

Un autre but de la présente invention est de fournir un méthode pour superviser le processus ou au moins un parmi une pluralité de composants dudit processus de la chaîne de production industrielle.

Ce but est atteint par un procédé selon la revendication 10.

D'autres particularités et avantages de ce procédé sont définies dans les revendications dépendantes de la revendication 10.

DESCRIPTION DES FIGURES ILLUSTRATIVES

D'autres particularités et avantages de la présente invention apparaîtront plus clairement à la lecture de la description ci-après, faite en référence aux dessins annexés, dans lesquels:

- figure 1 représente le schéma du système de gestion de risques, selon un mode de réalisation;
- figures 2 représente le schéma du dispositif d'analyse de corrélation, selon un mode de réalisation;

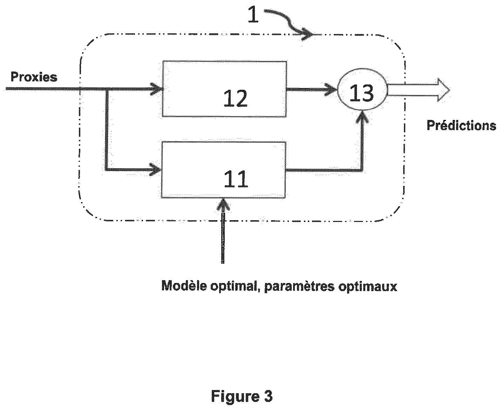

- figures 3 représente le schéma du dispositif de prédiction, selon un mode de réalisation;

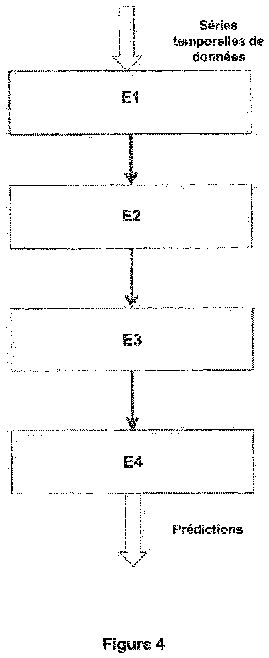

- figure 4 représente les différentes étapes du procédé de gestion de risque, selon un mode de réalisation;
- figure 5 représente le schéma de l'architecture du perceptron multicouche, selon un mode de réalisation;
- figure 6 représente le tableau de précision du système et du procédé de prédiction, selon un mode de réalisation.

DESCRIPTION DES MODES DE REALISATION PREFERES DE L'INVENTION

La présente invention concerne un système pour la gestion de risques dans un processus industriel dans une chaîne de production industrielle.

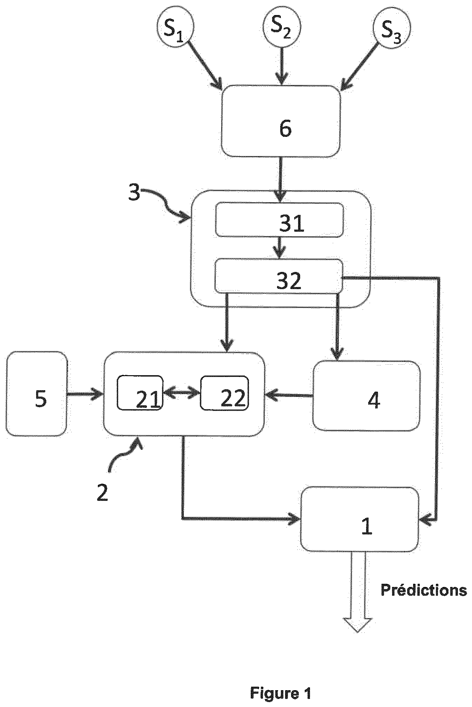

Le système (Figure 1) pour la gestion de risques dans un processus industriel d'une chaîne de production comprend au moins une base de données (6) contenant au moins un ensemble de séries temporelles de données brutes relatives audit processus, au moins un dispositif de pré-traitement de données (3) pour transformer, pour chaque série temporelle, lesdites données brutes en un ensemble de « proxies » de la volatilité mémorisé et relié à au moins une entité pertinente dudit processus, au moins un dispositif d'analyse de corrélations (4) connecté audit dispositif de pré-traitement de données (3) pour analyser les corrélations entre lesdits « proxies », au moins un dispositif d'identification de modèle (2) connecté audit dispositif de pré-traitement de données (3) pour produire au moins un modèle de prédiction basé sur ledit ensemble de « proxies », ledit modèle de prédiction étant utilisé par au moins un dispositif de prédiction (1) connecté au dispositif de pré-traitement de données (3) et audit dispositif d'identification de modèle (2), chacun desdits dispositifs de pré-traitement de données, d'identification de modèle, d'analyse de corrélations et de prédiction comportant au moins une mémoire pour le stockage de données et au moins un module, chaque module étant un programme exécutable sur le processeur d'un ordinateur, au moins un processeur pour l'exécution dudit module, le système étant caractérisé en ce que le dispositif d'analyse de corrélations (4), connecté audit dispositif d'identification de modèle (2) permet de sélectionner les « proxies » à utiliser pour l'identification du modèle de prédiction sur la base de la comparaison des valeurs des corrélations entre les « proxies » et une valeur seuil, et ledit dispositif de prédiction (1) permet de calculer, sur la base du modèle d'identification et de l'ensemble de « proxies », les prédictions desdits « proxies » de volatilité au moyen d'au moins une combinaison d'un des « proxies » de volatilité avec au moins un paramètre exogène, ledit paramètre étant un « proxy » de volatilité inclus dans l'ensemble des « proxies » de volatilité transmis par le dispositif de pré-traitement de données (3), lesdites prédictions étant enregistrées dans la mémoire du dispositif de prédiction (1) afin d'être utilisées pour la gestion de risque dans ledit processus.

Pour la prédiction d'un proxy donné de volatilité relative à une entité donnée, les « proxies » sélectionnés pour l'identification du modèle optimal et les paramètres optimaux sont ceux qui sont le plus corrélés audit proxy, c'est-à-dire que les coefficients de corrélation entre ledit proxy et chacun des proxies de l'ensemble des « proxies » sélectionnées sont supérieurs à une valeur de seuil prédéterminée donnée. Cela signifie également que les paramètres exogènes ou les « proxies » externes utilisés en combinaison dans le dispositif de prédiction sont inclus dans les « proxies » sélectionnées.

Le système, et en particulier le dispositif d'analyse de corrélation, permet de choisir une combinaison appropriée de « proxies » comme données d'entrée pour le dispositif de prédiction afin d'augmenter la précision dudit dispositif de prédiction.

Par risque, on entend un danger, un inconvénient plus ou moins probable auquel la chaîne de production ou au moins un élément de ladite chaîne de production est exposé.

Par entité, on entend une variable ou un paramètre pertinent pour la surveillance ou le contrôle dudit processus, par exemple et de manière non limitative, la pression ou la température mesurée dans le processus de production d'énergie par un réacteur, un moteur, etc.

Par volatilité, on entend une mesure du degré de variation d'une série temporelle d'une entité pertinente liée à un processus donné dans le temps. Par exemple et de manière non limitative, si le processus concerne la fusion nucléaire, la volatilité peut concerner la variation de la température de fusion, ladite température étant l'entité.

Par « proxy », on entend une variable utilisée pour quantifier la volatilité.

Le système de gestion de risques et/ou le système à surveiller comprend au moins un ensemble de capteurs (les éléments $S_1$, $S_2$ and $S_3$ de la Figure 1) recueillant des données dans le temps, ces données étant liées au processus industriel et/ou aux éléments de l'infrastructure exécutant ledit processus industriel (par exemple le réacteur produisant l'énergie dans une centrale électrique ou nucléaire). Les capteurs, en général, collectent des données qui établissent l'état actuel du comportement de processus plus ou moins complexe avec une grande variance et une perturbation. Par exemple et de manière non limitative, dans le cas du processus de production d'énergie par une centrale nucléaire ou électrique, lesdits capteurs ($S_1$, $S_2$, $S_3$) peuvent collecter la température ou la pression dans un réacteur en fonction du temps. Le processus peut également concerner la production de produits tels que des voitures ou des appareils électroménagers, dans ce cas, les capteurs ($S_1$, $S_2$, $S_3$) peuvent collecter les données relatives à la puissance ou énergie fournie par au moins un ensemble de moteurs de la chaîne de production au cours du temps. Lesdites données collectées sont alors stockées au cours du temps dans la base de données et forment des données brutes historiques. L'ensemble des données brutes est alors transmis au dispositif de pré-traitement de données(3).

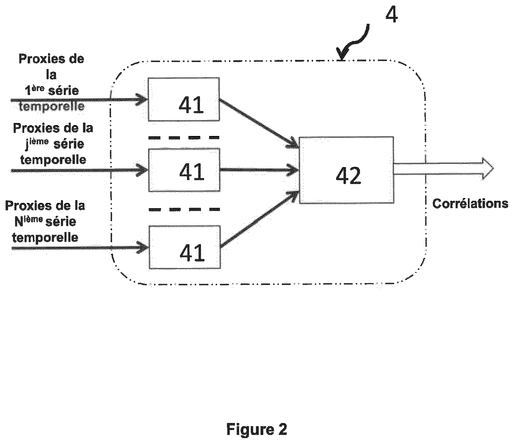

Dans certains modes de réalisation, le dispositif de pré-traitement de données (3) comprend, comme représenté sur la Figure 2, au moins un module d'imputation (31), dont l'exécution sur le processeur dudit dispositif de pré-traitement (3) permet d'attribuer des valeurs manquantes aux séries temporelles desdites données brutes. Le module d'imputation vérifie lesdites données brutes pour trouver les valeurs manquantes. En cas de valeurs manquantes dans les données brutes, de nouvelles valeurs sont générées par ledit module d'imputation, à partir des valeurs voisines des jours ou périodes précédent(e)s pendant lesquel(le)s le processus était en cours d'exécution. Les données imputées, c'est-à-dire auxquelles des valeurs manquantes ont été attribuées, sont ensuite transmises à un module de génération de « proxies » (32) également inclus dans ledit dispositif de pré-traitement (3).

Dans certains modes de réalisation, module de génération de proxy (32), après avoir reçu les données imputées du module d'imputation (31), génère, pour chaque série temporelle de données, un ensemble de «proxies» de volatilité liées à au moins une entité pertinente pour le processus en utilisant lesdites données imputées. Comme mentionné précédemment, l'entité peut concerner, par exemple et de manière non limitative, une température, une pression, etc.

Le module de génération de proxy comprend au moins un ensemble de fonctions prédéfinies de proxy de volatilité.

L'ensemble des « proxies » de volatilité générés peut comprendre des « proxies » liées à différents types d'entités. Par exemple, certains «proxies» peuvent être liés à la température, tandis que d'autres peuvent être liés à la pression ou à une autre variable pertinente pour le processus.

L'ensemble des « proxies » de volatilité est ensuite transmis au moins au dispositif d'analyse de corrélation (4), au dispositif d'identification (2) et au dispositif de prédiction (1).

Dans certains modes de réalisation, le dispositif de corrélation (4), connecté au dispositif de pré-traitement de données (3) comme représenté sur la Figure 1, enregistre dans sa mémoire l'ensemble des « proxies » de volatilité pour chaque série temporelle. Ledit dispositif de corrélation (4) comprend au moins un module « block » de corrélation (41) qui lit pour chaque ensemble de « proxies » correspondant à une série temporelle donnée et transmis par le dispositif de pré-traitement (3), et évalue les coefficients de corrélation entre les différents « proxies » dudit ensemble de « proxies ».

Le dispositif d'analyse de corrélation (4) comprend également au moins un module de méta-analyse (42), qui agrège, pour toutes les séries temporelles de données, les coefficients de corrélation correspondants en effectuant la moyenne desdits coefficients pour produire une mesure agrégée des coefficients de corrélation à enregistrer.

Dans certains modes de réalisation, le dispositif d'analyse de corrélation (4) comprend également un module pour générer un rapport de corrélation comportant la mesure agrégée des coefficients de corrélation, au moins toutes les séries temporelles et les « proxies » de volatilité correspondants, ledit rapport de corrélation étant transmis audit dispositif d'identification de modèle (2).

Dans certains modes de réalisation, le dispositif d'identification (2) comprend au moins un module pour l'analyse du rapport de corrélation transmis par le dispositif de corrélation (4) afin de sélectionner comme données d'entrée des « proxies » de volatilité, parmi tous les ensembles de « proxies » de volatilité, à utiliser pour l'identification du modèle de prédiction. Le coefficient de corrélation entre un proxy de l'ensemble de « proxies », lié à l'entité que l'utilisateur ou l'opérateur souhaite surveiller, et un autre proxy de cet ensemble de proxies est comparé à une valeur seuil. Ledit autre proxy est sélectionné selon que ledit coefficient de corrélation est supérieur ou non à la valeur seuil.

Dans certains modes de réalisation, le système comprend une interface utilisateur interactive (5) connecté au dispositif d'identification de modèle (2), ladite interface (5) comprenant au moins un moyen pour sélectionner:

- au moins une méthode d'apprentissage automatique à utiliser pour la prédiction, parmi un ensemble de méthodes d'apprentissage automatique enregistré dans la mémoire dudit dispositif d'identification de modèle (2);
- au moins une procédure d'évaluation, également enregistrée dans la mémoire dudit dispositif d'identification de modèle (2) et, à utiliser pour l'évaluation de la méthode d'apprentissage automatique sélectionnée;

la méthode d'apprentissage automatique et la procédure d'évaluation de ladite méthode étant transmises au dispositif d'identification de modèle (2).

Dans certains modes de réalisation, dispositif d'identification de modèle (2) comprend au moins un module d'identification structurelle (21) et un module d'identification paramétrique (22), dont les exécutions sur ledit dispositif d'identification de modèle (2), permettent de générer respectivement un modèle optimal et des paramètres optimaux reliés audit modèle sur la base des informations transmises par l'interface utilisateur interactive (5), le dispositif de pré-traitement de données (3) et le dispositif d'analyse de corrélation (4).

Le module d'identification structurelle construit, en fonction des données d'entrée reçues par le dispositif d'identification de modèle (2), un modèle qui ajuste le mieux les données brutes, tandis que le module d'identification paramétrique recherche les paramètres dudit modèle.

Les paramètres optimaux et/ou le modèle optimal dépendent du choix des «proxies» de volatilité sélectionnés par le dispositif d'identification du modèle (2), sur la base du rapport de corrélation, pour la prédiction d'un proxy de volatilité d'une entité donnée. Il s'ensuit que si l'ensemble des «proxies» de volatilité sélectionnés en entrée change, ce modèle ou ces paramètres changent également.

Le dispositif de prédiction (1) comprend au moins un module d'implémentation de modèle (11), l'exécution dudit module d'implémentation de modèle (11) permettant de générer les prédictions de l'ensemble des « proxies » de volatilité relatif à au moins un ensemble d'entités, sur la base de l'ensemble des « proxies » de volatilité transmis par le dispositif de pré-traitement de données (3) et le modèle optimal et les paramètres optimaux transmis par le dispositif d'identification de modèle (2).

Le processus par lequel les données collectées par les capteurs ($S_1$, $S_2$, $S_3$) sont générées est en général inconnu. En effet, il existe des facteurs externes ou des perturbations qui peuvent influencer les résultats de la mesure des entités. Par exemple et sans limitation, dans le cas de la production d'énergie par un réacteur nucléaire, on peut s'intéresser à la surveillance d'une entité telle que la température dans ledit réacteur. Cependant, les valeurs de température mesurées par les capteurs ($S_1$, $S_2$, $S_3$) peuvent être corrélées à la pression à l'intérieur du réacteur ou à la quantité de combustible, ce qui rend difficile de prévoir exactement les valeurs futures prises par ladite entité. Un tel processus s'appelle, en général, le processus de génération de données (DGP) et comprend toutes les influences aléatoires qui se combinent pour mener à des observations individuelles. Le DGP est inconnu, comme mentionné ci-dessus, et estimé par le modèle optimal obtenu par le dispositif d'identification du modèle (2). Les données obtenues dans le DGP peuvent être considérées comme des valeurs «réelles» ou «vraies» ou «originales» ou «observées» à une date ou à une heure donnée. L'ensemble des « proxies » générés, à partir des données collectées par les capteurs (S1, S2, S3), par le dispositif de pré-traitement correspond aux valeurs "observées" des proxies. Le modèle optimal obtenu par le dispositif d'identification du modèle (2) permet d'estimer lesdites valeurs «observées».

Le dispositif de prédiction (1) une mémoire de données originales (12), pour enregistrer les valeurs « observées » à une date donnée des « proxies » de volatilité reliés à au moins un ensemble d'entités que l'utilisateur souhaite contrôler.

Le dispositif de prédiction (1) comprend également au moins un module de mesure d'erreurs (13) dont l'exécution permet d'évaluer l'efficacité du modèle de prédiction en moyennant les erreurs obtenues par la différence entre les prédictions de l'ensemble des « proxies » de volatilité obtenues au moyen du module d'implémentation (11) et les valeurs « observées » dudit ensemble de « proxies » de volatilité enregistrées dans la mémoire de données originales (12).

Le système comprend également un module de rapport, dont l'exécution permet de générer un rapport de prédiction comprenant au moins des informations relatives aux prédictions des « proxies » de volatilité, les erreurs de prédiction et la mesure agrégée des coefficients de corrélation.

Dans certains modes de réalisation, le système peut comprendre un agencement d'analyse ou un dispositif d'analyse comportant au moins un ensemble de modules ou programmes pour analyser automatiquement le rapport de prédiction.

Dans certains modes de réalisation, le rapport de prédiction généré par le module de rapport permet à un système de générer une alerte lorsqu'un risque pour un processus donné est évalué.

Le système comprend également au moins une alarme (6) pour produire une alerte lorsque l'erreur prédite est supérieure à une valeur de tolérance prédéterminée.

Le système de gestion comprend un agencement d'arrêt ou un dispositif d'arrêt comportant au moins un ensemble de modules ou programmes pour bloquer automatiquement le processus industriel si un risque est détecté après analyse du rapport de prédiction.

Dans certains modes de réalisation, l'agencement d'arrêt ou le dispositif d'arrêt du système de gestion de risques comprend des moyens de communication (avec ou sans fil, par exemple Ethernet, WiFi, etc.) pour se connecter à un système de contrôle ou de commande de la chaîne de production et transmettre des instructions pour le blocage du processus exécutant le processus industriel.

Dans une alternative à la présente invention, le rapport de prédiction est affiché sur l'interface utilisateur interactive (5), ladite interface comprenant au moins un moyen pour permettre à un utilisateur ou un opérateur d'interrompre le processus ou de le laisser se poursuivre selon qu'une alerte est émise ou non. Par exemple et de manière non limitative, dans le cas de la surveillance de la température à l'intérieur du réacteur d'une centrale nucléaire, si ladite prévision du proxy de volatilité lié à l'entité, qui est la température, est supérieure à une valeur critique, l'opérateur peut arrêter le processus de production d'énergie dudit réacteur ou activer un ensemble d'instructions pour réguler ladite température.

Le système peut également être utilisé pour une surveillance en temps réel du fonctionnement de chaque élément d'une infrastructure (moteur, architecture informatique, etc.) utilisée pour implémenter un processus donné, par exemple le réacteur d'une centrale nucléaire ou le générateur électrique d'une éolienne.

En effet, une surveillance en temps réel par exemple de la température du moteur mettant en oeuvre un processus de production d'énergie peut permettre de détecter s'il y a un risque que le moteur surchauffe à un instant t donné, entraînant alors une baisse de production d'énergie ou un arrêt total de la production d'énergie.

La présente invention concerne également un procédé pour la gestion de risque dans un processus industriel d'une chaîne de production.

Le procédé pour la gestion de risque dans un processus industriel d'une chaîne de production contrôlé par un système comprenant au moins une base de données comportant des séries temporelles de données brutes, une architecture informatique comprenant au moins un processeur, au moins une mémoire pour le stockage de données et au moins un ensemble de modules, ledit ensemble de modules étant exécuté sur ledit processeur de ladite architecture informatique pour mettre en oeuvre ledit procédé comprenant au moins:

- le pré-traitement (E1) d'un ensemble de données brutes, pour chaque série temporelle, pour produire un ensemble de « proxies » de volatilité;
- l'analyse de corrélations (E2) entre les « proxies » dudit ensemble de « proxies » de volatilité;
- l'identification (E3) d'au moins un modèle et de paramètres optimaux qui dépendent au moins de l'ensemble dde « proxies » de volatilité produits dans l'étape de pré-traitement de données brutes;
- le calcul des prédictions (E4) de l'ensemble des « proxies" »de volatilité produit dans l'étape de pré-traitement au moyen du modèle optimal et des paramètres optimaux identifiés dans l'étape d'identification;

ledit procédé étant caractérisé en ce que l'analyse (E2) des corrélations entre lesdits « proxies » permet de sélectionner les « proxies » identification utiliser pour l'identification (E3) dudit modèle optimal et des paramètres optimaux et, le calcul des prédictions (E4) de l'ensemble des « proxies » de volatilité comprend la combinaison d'au moins un desdits « proxies » de volatilité avec au moins un paramètre exogène, ledit paramètre étant un « proxy » de volatilité inclus dans ledit ensemble de « proxies » de volatilité.

Le procédé comprend au moins une des étapes suivantes :

- la génération d'un rapport de prédiction comprenant au moins des informations relatives aux prédictions des «proxies» de volatilité, les erreurs de prédiction et la mesure agrégée des coefficients de corrélation ;
- l'analyse automatique du rapport de prédiction ;
- l'émission d'une alerte lorsque l'erreur prédite est supérieure à une valeur de tolérance prédéterminée.
- le blocage automatique ou manuel du processus industriel si une alerte est émise, c'est à dire si un risque est détecté après analyse du rapport de prédiction.

Dans certains modes de réalisation, l'étape de pré-traitement de données brutes (E1) comprend au moins:

- l'imputation de données brutes par assignation de valeurs manquantes aux séries temporelles desdites données brutes;
- la génération de « proxies », pour chaque série temporelle, d'un ensemble de « proxies » de volatilité en utilisant les données imputées.

L'exécution d'un module de génération de « proxies » sur le processeur d'un périphérique de pré-traitement de données peut implémenter plusieurs types de fonctions de « proxies » utilisés pour évaluer la volatilité liée à une entité. De préférence, l'ensemble des fonctions de proxy utilisé dans l'étape de génération de proxy comprend au moins:

- une variance ou un écart type glissant(e), sur une fenêtre de temps passée de taille n d'une entité ou d'une variable P, calculée par la relation suivante:

$$\sigma_t^{SD,n} = \sqrt{\frac{1}{n-1} \sum_{i=0}^{n-1} (r_{t-i} - \bar{r})^2}$$

où $r_t$ représente un paramètre mémorisé lié à une entité au temps $t$ et $\bar{r}$ est une moyenne calculée et mémorisée de ce paramètre au cours de la période $\{t, ..., t-n\}$. Par exemple et de manière non limitative, si l'entité représente la température (alors P=T) à l'intérieur d'un réacteur d'une centrale nucléaire, le paramètre $r_t$ peut être défini comme le logarithme du rapport entre la température $T_t$ au temps $t$, et la température $T_{t-1}$ au temps $t$ - 1, $r_t = \ln(T_t/T_{t-1})$.

- une information intra-journalière grossière qui est une famille de proxies $\sigma_t^i(P_0, P_{max}, P_{min})$ dépendant d'au moins une parmi les valeurs mémorisées suivantes de ladite entité pour un temps donné: la valeur initial $P_0$ de l'entité, sa valeur maximale $P_{max}$, sa valeur minimale $P_{min}$;

- un proxy $\sigma_t^G$ basé sur l'approche GARCH. En général, le proxy basé sur l'approche GARCH comporte l'expression suivante:

$$\sigma_t^G = \sqrt{\gamma + \sum_{j=1}^{p} \beta_j (\sigma_{t-j}^G)^2 + \sum_{j=1}^{q} \alpha_i (\varepsilon_{t-i})^2}$$

et est dénoté par GARCH( $p, q$ ). $\varepsilon_t$ est un composant stochastique variable dans le temps lié à une distribution normale, $\gamma$, $\beta$ et $\alpha$ sont des paramètres ajustables. De préférence, nous utilisons le modèle GARCH(1,1)

Dans certains modes de réalisation, l'étape d'analyse de corrélations (E2) comprend au moins:

- recevoir pour chaque série temporelle, l'ensemble correspondant de « proxies » de volatilité calculé dans l'étape de pré-traitement;
- évaluer les coefficients de corrélation entre les différents « proxies » dudit ensemble de « proxies » de volatilité;
- agréger les coefficients de corrélation obtenus pour toutes les séries temporelles pour obtenir une mesure agrégée statistiquement.

De préférence, les coefficients de corrélation pour une série temporelle donnée et l'ensemble correspondant de proxies de volatilité sont évalués en utilisant l'approche de la matrice de corrélation de Pearson.

Soit un ensemble de séries temporelle de données avec les indices $j = 1,...,N$. Pour chaque série temporelle $j$, Les coefficients de corrélation mémorisés de l'ensemble des « proxies » de volatilité correspondant à ladite série temporelle $j$ sont les éléments d'une matrice de corrélation $Corr(\sigma^{(j)})$. Les différentes matrices de corrélation, $Corr(\sigma^{(j)})$, ..., $Corr(\sigma^{(N)})$, sont ensuite agrégées en faisant la moyenne des éléments desdites matrices de corrélation. De préférence, au moins une technique de méta-analyse est utilisée pour agréger les matrices de corrélation.

Dans certains modes de réalisation, l'étape d'identification (E3) au moins une des étapes suivantes:

- la réception d'au moins une méthode d'apprentissage automatique présélectionnée et une procédure d'évaluation présélectionnée de ladite méthode d'apprentissage automatique présélectionnée à partir des données entrées par un utilisateur via une interface interactive;
- la réception, dans une mémoire, d'au moins un ensemble de « proxies » de volatilité obtenu dans l'étape de pré-traitement (E1);
- l'identification structurelle d'un modèle optimal et l'identification paramétrique de paramètres optimaux en utilisant au moins la méthode d'apprentissage automatique présélectionnée, au moins la procédure d'évaluation présélectionnée et l'ensemble des « proxies » de volatilité;

Dans certains modes de réalisation, la méthode d'apprentissage automatique présélectionnée est au moins une parmi les méthodes de réseau de neurones artificiels (ANN) et k-plus proches voisins (kNN).

Dans certains modes de réalisation, la procédure d'évaluation présélectionnée est au moins une des analyses par fenêtre glissante (RW) et par origine glissante (RO), lesdites analyses étant des techniques pour évaluer au moins la stabilité des paramètres d'un modèle respectivement sur une fenêtre glissante de taille fixe ou une origine glissante en parcourant un ensemble de données, la fenêtre ou l'origine étant déplacée vers l'avant par un incrément présélectionné.

Dans certains modes de réalisation, l'étape d'identification comprend au moins l'entraînement d'un modèle multivarié autoregressif non-linéaire afin de trouver un modèle optimal. De préférence, nous utilisons un modèle NARX (nonlinear autoregressive with exogenous input) multi-étapes lorsque la méthode the ANN est sélectionnée. Dans notre approche, la prédiction d'un « proxy » donné de volatilité qui est lié à une entité que l'on souhaite contrôler, par exemple et de manière non limitative, la température (ou la pression) à l'intérieur d'un réacteur d'une centrale nucléaire, est obtenue en utilisant des données historiques dudit « proxy » et des données passées, c'est à dire antérieures au temps où l'utilisateur souhaite effectuer la prédiction, d'un second proxy comme mesure d'entrée externe également appelée régresseur externe, par exemple un proxy lié à la pression (ou à la température) à l'intérieur dudit réacteur. Le proxy lié à la pression (ou à la température) s'appelle une donnée ou un paramètre d'entrée exogène. Le modèle NARX a, en général, la forme suivante $\sigma_{t+h}^{J} = f\left(\sigma_t^J, ..., \sigma_{t-m}^J, \sigma_t^X, ..., \sigma_{t-m}^X\right) + \omega$. $\sigma_t^J$ est le « proxy » que l'utilisateur ou l'opérateur souhaite prédire, $\sigma_t^X$ est le proxy exogène, $\omega$ est un paramètre représentant la valeur moyenne du bruit et $f$ est une fonction non-linéaire. La fonction utilisée peut être une fonction de seuil, une fonction de base radiale, une fonction tangente hyperbolique ou une fonction sigmoïdale. De préférence, nous utilisons une fonction sigmoïdale. Le paramètre $h$ représente l'horizon de prévision, qui est la durée dans le futur pour laquelle la prévision doit être effectuée et le paramètre $m$ représente la taille d'une fenêtre de temps passé. La prédiction multi-étapes est obtenue par une stratégie de prédiction directe dans laquelle:

- Pour chaque horizon $h$, un seul modèle est utilisé;
- la prédiction au pas $h$ s'effectue en utilisant le $h^{ième}$ modèle.

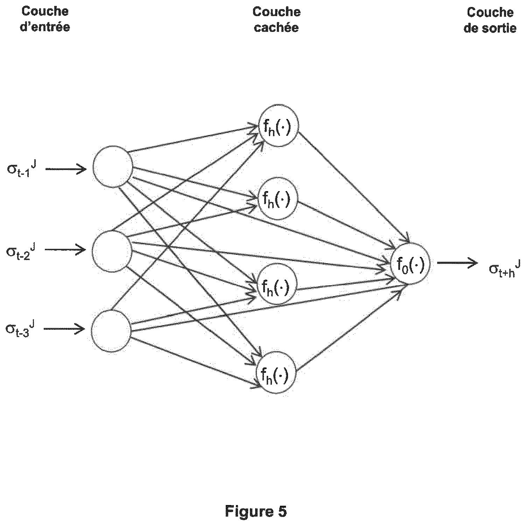

Dans la méthode ANN, une approche perceptron multicouche (MLP) est, de préférence, utilisée. Le MLP est un réseau de neurones qui possède des connexions unidirectionnelles entre les couches d'entrée et de sortie. Le MLP a, en général, trois types de couches: une couche d'entrée, une couche de sortie et une couche cachée, comme le montre la Figure 5. La couche d'entrée comprend des noeuds ou des neurones contenant des données d'entrée qui sont des « proxies » de volatilité. Les noeuds ou les neurones dans la couche d'entrée ne servent que de tampons pour distribuer les signaux d'entrée, dans ce cas l'ensemble des « proxies » de volatilité, vers d'autres noeuds ou neurones de la couche cachée.

Chaque noeud ou neurone de la couche cachée comprend une fonction d'activation, $f_h$, qui reçoit comme entrées les signaux d'entrée provenant de tous les noeuds ou neurones de la couche d'entrée et additionne les signaux d'entrée après leur pondération avec les poids, $w$, des connexions respectives de la couche d'entrée. La couche de sortie comprend au moins un noeud ou un neurone et une fonction d'activation, $f_0$. Le noeud ou le neurone de la couche de sortie reçoit, en tant que données, les signaux d'entrée de tous les noeuds de la couche d'entrée et les sommes de tous les noeuds de la couche cachée. Ensuite, la fonction d'activation $f_0$ calcule la sortie en fonction desdits signaux d'entrée et desdites sommes. La sortie est la valeur prédite du proxy de volatilité lié à l'entité que l'utilisateur ou l'opérateur souhaite surveiller ou contrôler. La sortie est donnée par la relation suivante:

$$\sigma_{t+h}^J = f_0\left(b_0 + \sum_{i=1}^I w_{i0}\, \sigma_{t-i}^J + \sum_{j=1}^H w_{j0}\, f_h\left(\sum_{i=1}^I w_{ij}\, \sigma_{t-i}^J + b_j\right)\right)$$

Le terme $b_0 + \sum_{i=1}^I w_{i0}\, \sigma_{t-i}^J$, est une composante autorégressive linéaire d'ordre $I$ le terme $\sum_{j=1}^H w_{j0}\, f_h\left(\sum_{i=1}^I w_{ij}\, \sigma_{t-i}^J + b_j\right)$ est une composante non-linéaire d'ordre $H$. $b_0$ et $b_j$ sont des biais inclus respectivement dans le noeud ou le neurone de la couche de sortie et les noeuds ou neurones de la couche cachée. Le biais est une valeur qui peut être associée à un noeud ou à un neurone d'un réseau neuronal afin d'augmenter la capacité dudit réseau à résoudre des problèmes. Les fonctions d'activation $f_0$ et $f_h$ toutes deux des fonctions sigmoïdales.

Dans le cas de la méthode kNN, et contrairement à l'approche ANN, La prédiction d'un « proxy » donné de volatilité, et lié à une entité, est basée sur la recherche des « proxies » de voisins optimaux qui possèdent les valeurs les plus proches dudit « proxy » donné de volatilité, pour lequel un utilisateur ou un opérateur exécute une opération de prédiction, au lieu de la recherche d'un modèle optimal et de paramètres optimaux comme dans la méthode ANN.

Le kNN est une méthode non paramétrique qui peut être utilisée pour la classification et la régression. La prédiction d'un ensemble donné de « proxies » est obtenue grâce à un apprentissage local en ajustant un modèle local simple dans le voisinage du proxy à prédire. Le voisinage d'un proxy est défini en prenant les $k$ valeurs des « proxies » ayant les valeurs minimales pour une métrique de distance prédéfinie choisie. La prédiction est une moyenne pondérée desdites $k$ valeurs, $1/k$ étant le poids.

Dans l'étape d'identification du modèle, une approche de validation croisée est utilisée pour la méthode ANN. Dans ladite approche, les données d'entrée sont divisées en deux parties. La première partie est utilisée pour la construction du modèle de prédiction et la deuxième partie est utilisée pour tester ou valider les résultats dudit modèle et calculer les erreurs de prédiction. La construction et l'étape de test sont mises en oeuvre en utilisant la procédure d'évaluation présélectionnée.

Dans le cas de la méthode kNN, le nombre de voisins optimaux est fixé par la valeur de $k$. L'étape d'identification dans ce cas comprend au moins la sélection de la valeur optimale pour $k$. Le critère de sélection de la valeur de $k$ est basé sur la déviation stochastique $\Delta_k$ entre la séquence de prédiction d'un proxy donné $\hat{\varphi}_k = \{\hat{\sigma}_{t+1}, \ldots, \hat{\sigma}_{t+h}\}$ et la série temporelle originale dudit proxy $\varphi = \{\sigma_1, \ldots, \sigma_t\}$.

Le critère de sélection de la valeur optimale de k est donc basé sur la minimisation de $\Delta_k$, c'est à dire $k^* = \arg\min \Delta_k$, où $k^*$ est la valeur optimale de $k$.

Pour un proxy donné de volatilité lié à une entité qu'un utilisateur ou un opérateur souhaite surveiller, l'analyse de corrélation permet de choisir le meilleur ensemble de « proxies » externes ayant une influence sur le comportement dudit proxy de volatilité donné et permet ainsi de mieux comprendre La dynamique ou l'évolution de ladite entité. Cette approche permet de contrôler avec précision les paramètres pertinents de chaque processus ou de chaque élément de la chaîne de production industrielle.

Dans certains modes de réalisation, le calcul des prédictions (E4) des « proxies » de volatilité comprend au moins:

- le calcul des prédictions, pour chaque série temporelle, de l'ensemble correspondant de « proxies » de volatilité au moyen du modèle multivarié autoregressif non-linéaire obtenu dans l'étape d'identification (E3);
- le calcul des erreurs de prédiction relatives aux prédictions dudit ensemble de « proxies » de volatilité.

La solution technique décrite ci-dessus peut également être utilisée dans d'autres domaines tels que la prévision en météorologie ou les prévisions en économie. Dans ce dernier cas, par exemple et de manière non limitative, l'entité utilisée dans le calcul du proxy de volatilité de l'écart type peut être le prix de clôture d'un marché, donc $P = P^{(c)}$.

Dans la famille de proxies $\sigma_t^i(P_0, P_{max}, P_{min})$ relative à l'information intra-journalière grossière, $P_0$ peut être le prix d'ouverture du marché $P^{(o)}$, $P_{max}$ peut être le prix le plus élevé du marché $P^{(h)}$ et $P_{min}$ peut être le prix le plus bas $P^{(l)}$ sur le marché pour un jour donné. Ladite famille peut comprendre au moins un des « proxies » suivants:

$$\sigma_t^0 = \left[\ln\left(P_{t+1}^{(c)} \middle/ P_t^{(c)}\right)\right]^2$$

$$\sigma_t^1 = \frac{1}{2\rho}\left[\ln\left(P_{t+1}^{(o)} \middle/ P_t^{(c)}\right)\right]^2 + \frac{1}{2(1-\rho)}\left[\ln\left(P_{t+1}^{(c)} \middle/ P_t^{(o)}\right)\right]^2$$

avec $\rho$ inclus dans l'intervalle [0, 1]. Le premier élément du terme de droite est liée à la volatilité nocturne tandis que le second élément est lié à la volatilité intra-journalière;

$$\sigma_t^2 = \frac{1}{2\ln(4)}\left[\ln\left(P_t^{(h)} \middle/ P_t^{(l)}\right)\right]^2$$

$$\sigma_t^3 = \frac{a}{\rho}\left[\ln\left(P_{t+1}^{(o)} \middle/ P_t^{(c)}\right)\right]^2 + \frac{1-a}{(1-\rho)}\sigma_t^2$$

où $\alpha$ est un paramètre de pondération;

$$\sigma_t^4 = 0.511(u-d)^2 - 0.019[c(u+d) - 2ud] - 0.383c^2$$

$$\sigma_t^5 = 0.511(u-d)^2 - (2\ln 2 - 1)c^2$$

et

$$\sigma_t^6 = \frac{a}{\rho}\left[\ln\left(P_{t+1}^{(o)} \middle/ P_t^{(c)}\right)\right]^2 + \frac{1-a}{(1-\rho)}\sigma_t^4$$

où les paramètres $u = \ln(P_t^{(h)}/P_t^{(o)})$, $d = \ln(P_t^{(l)}/P_t^{(o)})$, et $c = \ln(P_t^{(c)}/P_t^{(o)})$, sont les prix normalisés respectivement haut, bas et de clôture.

Comme application, l'ensemble de « proxies », défini ci-dessus, a été calculé sur un ensemble de 40 séries temporelles constituant l'indice boursier CAC40 pour environ six ans pour un total de 1489 échantillons OHLC (prix d'ouverture, haut, bas et de clôture) pour chaque série temporelle. En plus des « proxies », une variable de volume (représentant le nombre de transactions pour un jour donné du marché boursier) a également été incluse. À titre de comparaison, la méthode ANN, la méthode kNN et le modèle GARCH (1, 1) ont été implémentés. La précision également appelée MASE (erreur moyenne absolue d'échelle) des méthodes de prédiction décrites a ensuite été calculée.

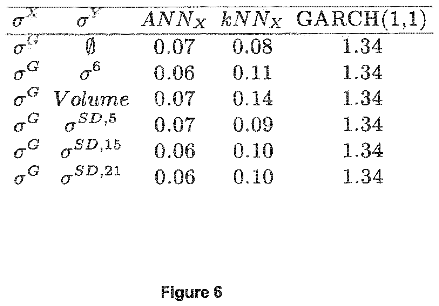

La Figure 6, montre un tableau contenant la MASE de la méthode de prédiction décrite ci-dessus. La MASE a été normalisée par une méthode dite "naïve" pour un horizon de prédiction de volatilités de 10, pour les combinaisons de « proxies » (ligne) et différentes techniques de prévision (colonnes). L'indice X indique l'utilisation du second proxy en tant que régresseur ou paramètre externe. Dans la méthode dite «naïve», la valeur prédite, d'un proxy donné de volatilité d'un ensemble de « proxies » est obtenue en faisant une moyenne des autres « proxies » dudit ensemble de « proxies », sur un horizon donné $h$ de prédiction.

On peut observer que la combinaison de « proxies » telle que décrite dans la présente invention permet une bonne prévision du « proxy » de volatilité liée à une entité donnée, et permet ainsi un suivi précis de ladite entité et plus généralement le processus pour lequel l'entité est pertinente.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

## Revendications

1. Système de contrôle de risques dans un processus industriel d'une chaîne de production comprenant au moins une base de données (6) contenant au moins un ensemble de séries temporelles de données brutes relatives audit processus, au moins un dispositif de pré-traitement de données (3) pour transformer, pour chaque série temporelle, lesdites données brutes en un ensemble de « proxies » de la volatilité mémorisé et relié à au moins une entité pertinente dudit processus, au moins un dispositif d'analyse de corrélations (4) connecté audit dispositif de pré-traitement de données (3) pour analyser les corrélations entre lesdits « proxies », au moins un dispositif d'identification de modèle (2) connecté audit dispositif de pré-traitement de données (3) pour produire au moins un modèle de prédiction basé sur ledit ensemble de « proxies », ledit modèle de prédiction étant utilisé par au moins un dispositif de prédiction (1) connecté au dispositif de pré-traitement de données (3) et audit dispositif d'identification de modèle (2), chacun desdits dispositifs de pré-traitement de données, d'identification de modèle, d'analyse de corrélations et de prédiction comportant au moins une mémoire pour le stockage de données et au moins un module, chaque module étant un programme exécutable par ordinateur comprenant au moins un processeur pour l'exécution dudit module, le système étant **caractérisé en ce que** :

   • le dispositif de pré-traitement (3) génère des « proxies » représentatifs d'une variable quantifiant la volatilité qui correspond au degré de variation d'une série temporelle d'une entité mesurée par au moins un capteur ($S_1$, $S_2$, $S_3$) au sein dudit processus ;

   - le dispositif d'analyse de corrélations (4), connecté audit dispositif d'identification de modèle (2) sélectionne les « proxies » à utiliser pour l'identification du modèle de prédiction sur la base de la comparaison des valeurs des corrélations entre les « proxies » et une valeur seuil, ce dispositif de corrélation (4) comprenant au moins un module « block » de corrélation (41) qui lit pour chaque ensemble de « proxies » correspondant à une série temporelle donnée et transmis par le dispositif de pré-traitement (3), et évalue les coefficients de corrélation entre les différents « proxies » dudit ensemble de « proxies », lesdits coefficients de corrélation étant agrégés pour toutes les séries temporelles par au moins un module de méta-analyse (42) qui fait la moyenne desdits coefficients pour produire une mesure agrégée des coefficients de corrélation à enregistrer,

   • ledit dispositif de prédiction (1) calcule, sur la base du modèle d'identification et de l'ensemble de « proxies », les prédictions desdits « proxies » de volatilité au moyen d'au moins une combinaison d'un des « proxies » de volatilité avec au moins un paramètre exogène, ledit paramètre exogène étant un « proxy » de volatilité inclus dans l'ensemble des « proxies » de volatilité transmis par le dispositif de pré-traitement de données (3),
   • l'ensemble des « proxies » générés, à partir des données collectées par les capteurs (S1, S2, S3), par le dispositif de pré-traitement (3) correspond aux valeurs "observées" des proxies, le modèle optimal obtenu par le dispositif d'identification du modèle (2) permettant d'estimer lesdites valeurs «observées» ;

• ledit dispositif de prédiction (1) comprend au moins un module d'implémentation de modèle (11), une mémoire de données originales (12) pour enregistrer les valeurs « observées » à une date donnée des « proxies » de volatilité reliés à au moins un ensemble d'entités que l'utilisateur souhaite contrôler et un module de mesure d'erreurs (13), l'exécution dudit module d'implémentation de modèle (11) permettant de générer les prédictions de l'ensemble des « proxies » de volatilité sur la base de l'ensemble des « proxies » de volatilité transmis par le dispositif de pré-traitement de données (3) et le modèle optimal et les paramètres optimaux transmis par le dispositif d'identification de modèle (2), l'exécution du module de mesure d'erreurs (13) permettant d'évaluer l'efficacité du modèle de prédiction en moyennant les erreurs obtenues par la différence entre les prédictions de l'ensemble des « proxies » de volatilité obtenues au moyen du module d'implémentation (11) et les valeurs « observées » dudit ensemble de « proxies » de volatilité enregistrées dans la mémoire de données originales (12) ;

• lesdites prédictions sont enregistrées par un module de rapport sous forme d'un rapport de prédiction comprenant au moins des informations relatives aux prédictions des «proxies» de volatilité, les erreurs de prédiction et la mesure agrégée des coefficients de corrélation, dans la mémoire du dispositif de prédiction (1) et utilisées pour le contrôle de risque dans ledit processus ;

• ledit système comprend au moins une alarme (6) pour produire une alerte lorsque l'erreur prédite est supérieure à une valeur de tolérance prédéterminée et un dispositif d'arrêt comportant un ensemble de modules ou programmes de blocage du processus industriel si un risque est détecté après analyse automatique du rapport de prédiction, ledit dispositif d'arrêt se connectant, via des moyens de communication, à un système de commande de la chaîne de production et transmettant des instructions de blocage automatique dudit processus industriel.

2. Système de contrôle de risques selon la revendication 1, **caractérisé en ce que** le dispositif de pré-traitement de données (3) comprend au moins un module d'imputation (31) et un module de génération de « proxies » (32), dont les exécutions sur le processeur dudit dispositif de pré-traitement (3) permet respectivement d'attribuer des valeurs manquantes aux séries temporelles desdites données brutes, et de générer pour chaque série temporelle, un ensemble de « proxies » en utilisant lesdites données imputées.

3. Système de contrôle de risques selon l'une des revendications 1 à 2, **caractérisé en ce que** le dispositif de corrélation (4) comprend un module pour générer un rapport de corrélation comportant la mesure agrégée des coefficients de corrélation, au moins toutes les séries temporelles et les « proxies » de volatilité correspondants, ledit rapport de corrélation étant transmis audit dispositif d'identification de modèle (2).

4. Système de contrôle de risques selon l'une des revendications 1 à 3, **caractérisé en ce que** le dispositif d'identification (2) comprend au moins un module pour l'analyse du rapport de corrélation transmis par le dispositif de corrélation (4) afin de sélectionner comme données d'entrée des « proxies » de volatilité, parmi tous les ensembles de « proxies » de volatilité, à utiliser pour l'identification du modèle de prédiction.

5. Système de contrôle de risques selon la revendication 1, **caractérisé en ce qu'**il comprend une interface utilisateur interactive (5) connecté au dispositif d'identification de modèle (2), ladite interface (5) comprenant au moins un moyen pour sélectionner:

• au moins une méthode d'apprentissage automatique à utiliser pour la prédiction, parmi un ensemble de méthodes d'apprentissage automatique enregistré dans la mémoire dudit dispositif d'identification de modèle (2);
• au moins une procédure d'évaluation, également enregistrée dans la mémoire dudit dispositif d'identification de modèle (2), à utiliser pour l'évaluation de la méthode d'apprentissage automatique sélectionnée;

la méthode d'apprentissage automatique et la procédure d'évaluation de ladite méthode étant transmises au dispositif d'identification de modèle (2).

6. Système de contrôle de risques selon la revendication 1, **caractérisé en ce que** le dispositif d'identification de modèle (2) comprend au moins un module d'identification structurelle (21) et un module d'identification paramétrique (22), dont les exécutions sur ledit dispositif d'identification de modèle (2), permettent de générer respectivement un modèle optimal et des paramètres optimaux reliés audit modèle sur la base des informations transmises par l'interface utilisateur interactive (5), le dispositif de pré-traitement de données(3) et le dispositif d'analyse de corrélation (4).

7. Système de contrôle de risques selon l'une des revendications 1 à 6, **caractérisé en ce que** le rapport de prédiction généré par le module de rapport permet à un système de générer une alerte lorsqu'un risque pour un processus donné est évalué.

8. Système de contrôle de risques selon l'une des revendications 1 à 7, **caractérisé en ce que** le rapport de prédiction est affiché sur l'interface utilisateur interactive (5), ladite interface comprenant au moins un moyen pour permettre à un utilisateur ou un opérateur d'interrompre le processus ou de le laisser se poursuivre selon qu'une alerte est émise ou non.

9. Procédé de contrôle de risques dans un processus industriel d'une chaîne de production contrôlé par un système comprenant au moins une base de données comportant des séries temporelles de données brutes, une architecture informatique comprenant au moins un processeur, au moins une mémoire pour le stockage de données et au moins un ensemble de modules, ledit ensemble de modules étant exécuté sur ledit processeur de ladite architecture informatique pour mettre en oeuvre ledit procédé comprenant au moins:

   • le pré-traitement (E1) d'un ensemble de données brutes, pour chaque série temporelle, pour produire un ensemble de « proxies » de volatilité;
   • l'analyse de corrélations (E2) entre les « proxies » dudit ensemble de « proxies » de volatilité;
   • l'identification (E3) d'au moins un modèle et de paramètres optimaux qui dépendent au moins de l'ensemble de « proxies » de volatilité produits dans l'étape de pré-traitement de données brutes;
   • le calcul des prédictions (E4) de l'ensemble des « proxies » de volatilité produit dans l'étape de pré-traitement au moyen du modèle optimal et des paramètres optimaux identifiés dans l'étape d'identification;

   ledit procédé étant **caractérisé en ce que** le pré-traitement (E1) génère des « proxies » représentatifs d'une variable quantifiant la volatilité qui correspond au degré de variation d'une série temporelle d'une entité mesurée par au moins un capteur ($S_1$, $S_2$, $S_3$) au sein dudit processus et **en ce que** :

   • l'analyse (E2) des corrélations entre lesdits « proxies » permet de sélectionner les « proxies » à utiliser pour l'identification (E3) dudit modèle optimal et des paramètres optimaux ;
   • l'analyse de corrélations (E3) comprend au moins la réception, pour chaque série temporelle, de l'ensemble correspondant de « proxies » de volatilité calculé dans l'étape de pré-traitement (E1), l'évaluation des coefficients de corrélation entre les différents « proxies » dudit ensemble de «proxies» de volatilité et l'agrégation, en utilisant une méthode de méta-analyse, des coefficients de corrélation obtenus pour toutes les séries temporelles pour obtenir une mesure agrégée statistiquement ;
   • le calcul des prédictions (E4) de l'ensemble des « proxies » de volatilité comprend la combinaison d'au moins un desdits « proxies » de volatilité avec au moins un paramètre exogène, ledit paramètre exogène étant un « proxy » de volatilité inclus dans ledit ensemble de « proxies » de volatilité,
   • l'ensemble des « proxies » générés, à partir des données collectées par les capteurs (S1, S2, S3), par le dispositif de pré-traitement (3) correspond aux valeurs "observées" des proxies, le modèle optimal obtenu par le dispositif d'identification du modèle (2) permettant d'estimer lesdites valeurs «observées» ;
   • ledit procédé comportant en outre :

      - l'exécution d'un module d'implémentation de modèle (11) permettant de générer les prédictions de l'ensemble des « proxies » de volatilité sur la base de l'ensemble des « proxies » de volatilité transmis par le dispositif de pré-traitement de données (3) et le modèle optimal et les paramètres optimaux transmis par le dispositif d'identification de modèle (2), pour enregistrer, dans une mémoire de données originales (12), les valeurs « observées » à une date donnée des « proxies » de volatilité reliés à au moins un ensemble d'entités que l'utilisateur souhaite contrôler ;
      - l'exécution d'un module de mesure d'erreurs (13) permettant d'évaluer l'efficacité du modèle de prédiction en moyennant les erreurs obtenues par la différence entre les prédictions de l'ensemble des « proxies » de volatilité obtenues au moyen du module d'implémentation (11) et les valeurs « observées » dudit ensemble de « proxies » de volatilité enregistrées dans la mémoire de données originales (12) ;
      - la génération d'un rapport de prédictions comportant au moins des informations relatives aux prédictions des «proxies» de volatilité, les erreurs de prédiction et la mesure agrégée des coefficients de corrélation ;
      - l'analyse automatique du rapport de prédictions ;
      - la production d'une alerte par au moins une alarme (6) lorsque l'erreur prédite est supérieure à une valeur de tolérance prédéterminée ;
      - l'exécution d'un ensemble de modules ou programmes de blocage du processus industriel si un risque est détecté après analyse du rapport de prédiction ;
      - la transmission d'instructions de blocage à un système de commande de la chaîne de production pour bloquer automatiquement ledit processus industriel.

**10.** Procédé de contrôle de risques selon la revendication 9, **caractérisé en ce que** l'étape de pré-traitement de données brutes (E1) comprend au moins:

- l'imputation de données brutes par assignation de valeurs manquantes aux séries temporelles desdites données brutes;
- la génération de « proxies », pour chaque série temporelle, d'un ensemble de « proxies » de volatilité en utilisant les données imputées.

**11.** Procédé de contrôle de risques selon l'une des revendications 9 à 10, **caractérisé en ce que** l'étape d'identification (E3) au moins une des étapes suivantes:

- la réception d'au moins une méthode d'apprentissage automatique présélectionnée et une procédure d'évaluation, présélectionnée, de ladite méthode d'apprentissage automatique présélectionnée à partir des données entrées par un utilisateur via une interface interactive;
- la réception, dans une mémoire, d'au moins un ensemble de « proxies » de volatilité obtenu dans l'étape de pré-traitement (E1);
- l'identification structurelle d'un modèle optimal et l'identification paramétrique de paramètres optimaux en utilisant au moins la méthode d'apprentissage automatique présélectionnée, au moins la procédure d'évaluation présélectionnée et l'ensemble des « proxies » de volatilité;

**12.** Procédé de contrôle de risques selon la revendication 11, **caractérisé en ce que** la méthode d'apprentissage automatique présélectionnée est au moins une parmi les méthodes de réseau de neurones artificiels (ANN) et k-plus proches voisins (kNN).

**13.** Procédé de contrôle de risques selon la revendication 12, **caractérisé en ce que** la procédure d'évaluation présélectionnée est au moins une des analyses par fenêtre glissante (RW) et par origine glissante (RO), lesdites analyses étant des techniques pour évaluer au moins la stabilité des paramètres d'un modèle respectivement sur une fenêtre glissante de taille fixe ou une origine glissante en parcourant un ensemble de données, la fenêtre ou l'origine étant déplacée vers l'avant par un incrément présélectionné.

**14.** Procédé de contrôle de risques selon l'une des revendications 9 à 13, **caractérisé en ce que** l'étape d'identification (E3) comprend au moins l'entraînement d'un modèle multivarié autoregressif non-linéaire afin de trouver un modèle optimal.

**15.** Procédé de contrôle de risques selon l'une des revendications 9 à 14, **caractérisé en ce que** le calcul des prédictions (E4) des « proxies » de volatilité comprend au moins:

- le calcul des prédictions, pour chaque série temporelle, de l'ensemble correspondant de « proxies » de volatilité au moyen du modèle multivarié autoregressif non-linéaire obtenu dans l'étape d'identification (E3);
- le calcul des erreurs de prédiction relatives aux prédictions dudit ensemble de « proxies » de volatilité.

**16.** Procédé de contrôle de risques selon l'une des revendications 9 à 15, **caractérisé en ce que** les coefficients de corrélation pour une série temporelle donnée et l'ensemble correspondant de « proxies » de volatilité sont évalués en utilisant la méthode des matrices de corrélation de Pearson.

**Patentansprüche**

**1.** Verfahren zum Überwachen von Risiken in einem industriellen Prozess einer Produktionskette, umfassend mindestens eine Datenbank (6), die mindestens einen Satz von Zeitreihen von Originaldaten enthält, die sich auf den Prozess beziehen, mindestens eine Datenvorverarbeitungsvorrichtung (3) zum Umwandeln, für jede Zeitreihe, der Originaldaten in einen gespeicherten und mit mindestens einer sachdienlichen Entität des Prozesses verknüpften Satz von "Proxys" der Volatilität, mindestens eine Korrelationsanalysevorrichtung (4), die mit der Datenvorverarbeitungsvorrichtung (3) verbunden ist, zum Analysieren der Korrelationen zwischen den "Proxys", mindestens eine Modellidentifikationsvorrichtung (2), die mit der Datenvorverarbeitungsvorrichtung (3) verbunden ist, zum Produzieren mindestens eines Vorhersagemodells basierend auf dem Satz von "Proxys", wobei das Vorhersagemodell durch mindestens eine Vorhersagevorrichtung (1) verwendet wird, die mit der Datenvorverarbeitungsvorrichtung (3) und mit der Modellidentifikationsvorrichtung (2) verbunden ist, wobei jede der Vorrichtungen zum Vorverarbeiten von Daten, Identifizieren des Modells, Analysieren von Korrelationen und Vorhersagen mindestens einen Speicher für das Abspeichern der Daten und mindestens ein Modul aufweist, wobei jedes Modul ein Programm ist, das durch einen Rechner ausführbar ist, umfassend mindestens einen Prozessor für die Ausführung des Moduls, wobei das System **dadurch gekennzeichnet ist, dass**:

- die Vorverarbeitungsvorrichtung (3) "Proxys" erzeugt, die eine Variable darstellen, die die Volatilität quantifiziert, die dem Grad einer Variation einer Zeitreihe einer Entität entspricht, die durch mindestens einen Sensor ($S_1$, $S_2$, $S_3$) innerhalb des Prozesses gemessen wird;

- die Korrelationsanalysevorrichtung (4), die mit der Modellidentifikationsvorrichtung (2) verbunden ist, die "Proxys", die für die Identifikation des Vorhersagemodells zu verwenden sind, auf der Basis des Vergleichs der Werte der Korrelationen zwischen den "Proxys" und einem Schwellenwert auswählt, diese Korrelationsvorrichtung (4) umfassend mindestens ein Korrelations-"Block"-Modul (41), das für jeden Satz von "Proxys" ausliest, die einer gegebenen Zeitreihe entsprechen und durch die Vorverarbeitungsvorrichtung (3) übertragen werden, und die Koeffizienten der Korrelation zwischen den verschiedenen "Proxys" des Satzes von "Proxys" auswertet, wobei die Korrelationskoeffizienten für alle Zeitreihen durch mindestens ein Metaanalysemodul (42) aggregiert werden, das die Koeffizienten zum Produzieren einer aggregierten Messung der aufzuzeichnenden Korrelationskoeffizienten mittelt,

- die Vorhersagevorrichtung (1) auf der Basis des Identifikationsmodells und des Satzes von "Proxys" die Vorhersagen der Volatilitäts-"Proxys" mittels mindestens einer Kombination eines der Volatilitäts-"Proxys" mit mindestens einem exogenen Parameter berechnet, wobei der exogene Parameter ein Volatilitäts-"Proxy" ist, der in dem Satz der Volatilitäts-"Proxys" eingeschlossen ist, die durch die Datenvorverarbeitungsvorrichtung (3) übertragen werden,

- der Satz von "Proxys", die aus Daten, die durch die Sensoren (S1, S2, S3) gesammelt werden, durch die Vorverarbeitungsvorrichtung (3) erzeugt werden, den "beobachteten" Werten der Proxys entspricht, wobei das optimale Modell, das durch die Modellidentifikationsvorrichtung (2) erhalten wird, es ermöglicht, die "beobachteten" Werte zu schätzen;

- die Vorhersagevorrichtung (1) mindestens ein Modellimplementierungsmodul (11), einen Ursprungsdatenspeicher (12) zum Aufzeichnen der "beobachteten" Werte zu einem gegebenen Datum der Volatilitäts-"Proxys", die mit mindestens einem Satz von Entitäten verbunden sind, den der Benutzer überwachen möchte, und ein Fehlermessmodul (13) umfasst, wobei die Ausführung des Modellimplementierungsmoduls (11) es ermöglicht, die Vorhersagen des Satzes der Volatilitäts-"Proxys" auf der Basis des Satzes der Volatilitäts-"Proxys", die durch die Datenvorverarbeitungsvorrichtung (3) übertragen werden, und des optimalen Modells und der optimalen Parameter zu erzeugen, die durch die Modellidentifikationsvorrichtung (2) übertragen werden, wobei die Ausführung des Fehlermessmoduls (13) es ermöglicht, die Effizienz des Vorhersagemodells auszuwerten, indem die Fehler gemittelt werden, die durch die Differenz zwischen den Vorhersagen des Satzes der Volatilitäts-"Proxys", die mittels des Implementierungsmoduls (11) erhalten werden, und den "beobachteten" Werten des Satzes von Volatilitäts-"Proxys" erhalten werden, die in dem Ursprungsdatenspeicher (12) aufgezeichnet sind;

- die Vorhersagen durch ein Berichtsmodul in Form eines Vorhersageberichts, umfassend mindestens Informationen über die Vorhersagen der Volatilitäts-"Proxys", die Vorhersagefehler und die aggregierte Messung der Korrelationskoeffizienten in dem Speicher der Vorhersagevorrichtung (1) aufgezeichnet werden und für die Risikoüberwachung in dem Prozess verwendet werden;

- das System mindestens einen Alarm (6) zum Produzieren einer Warnung, wenn der vorhergesagte Fehler größer als ein vorbestimmter Toleranzwert ist, und eine Stoppvorrichtung umfasst, die einen Satz von Modulen oder Programmen zum Blockieren des industriellen Prozesses aufweist, falls nach einer automatischen Analyse des Vorhersageberichts ein Risiko festgestellt wird, wobei sich die Stoppvorrichtung über Kommunikationsmittel mit einem Steuersystem der Produktionskette verbindet und Anweisungen zum automatischen Blockieren des industriellen Prozesses überträgt.

2. Risikoüberwachungssystem nach Anspruch 1,
**dadurch gekennzeichnet, dass** die Datenvorverarbeitungsvorrichtung (3) mindestens ein Zuteilungsmodul (31) und ein Modul (32) zum Erzeugen von "Proxys" umfasst, deren Ausführungen auf dem Prozessor der Vorverarbeitungsvorrichtung (3) es jeweils ermöglichen, den Zeitreihen der Originaldaten fehlende Werte zuzuordnen und für jede Zeitreihe einen Satz von "Proxys" zu erzeugen, indem die zugeteilten Daten verwendet werden.

3. Risikoüberwachungssystem nach einem der Ansprüche 1 bis 2,

**dadurch gekennzeichnet, dass** die Korrelationsvorrichtung (4) ein Modul zum Erzeugen eines Korrelationsberichts umfasst, der die aggregierte Messung der Korrelationskoeffizienten, mindestens alle Zeitreihen und die entsprechenden Volatilitäts-"Proxys" aufweist, wobei der Korrelationsbericht an die Modellidentifikationsvorrichtung (2) übertragen wird.

4. Risikoüberwachungssystem nach einem der Ansprüche 1 bis 3,
   **dadurch gekennzeichnet, dass** die Identifikationsvorrichtung (2) mindestens ein Modul zum Analysieren des Korrelationsberichts umfasst, der durch die Korrelationsvorrichtung (4) übertragen wird, um als Eingabedaten die Volatilitäts-"Proxys" aus allen Sätzen von Volatilitäts-"Proxys" auszuwählen, die für die Identifikation des Vorhersagemodells verwendet werden sollen.

5. Risikoüberwachungssystem nach Anspruch 1,
   **dadurch gekennzeichnet, dass** es eine interaktive Benutzerschnittstelle (5) umfasst, die mit der Modellidentifikationsvorrichtung (2) verbunden ist, die Schnittstelle (5) umfassend mindestens ein Mittel zum Auswählen:

   • mindestens einer Methode für maschinelles Lernen, die für die Vorhersage verwendet werden soll, aus einem Satz von Methoden für maschinelles Lernen, der in dem Speicher der Modellidentifikationsvorrichtung (2) gespeichert ist;
   • mindestens eines Auswertungsvorgehens, das ebenfalls in dem Speicher der Modellidentifikationsvorrichtung (2) aufgezeichnet ist, das für die Auswertung der ausgewählten Methode für maschinelles Lernen verwendet werden soll;
   wobei die Methode für maschinelles Lernen und das Vorgehen zum Auswerten dieser Methode an die Modellidentifikationsvorrichtung (2) übertragen werden.

6. Risikoüberwachungssystem nach Anspruch 1,
   **dadurch gekennzeichnet, dass** die Modellidentifikationsvorrichtung (2) mindestens ein Strukturidentifikationsmodul (21) und ein Parameteridentifikationsmodul (22) umfasst, deren Ausführungen auf der Modellidentifikationsvorrichtung (2) es ermöglichen, jeweils ein optimales Modell und optimale Parameter, die mit dem Modell verbunden sind, auf der Basis der Informationen zu erzeugen, die durch die interaktive Benutzerschnittstelle (5), die Datenvorverarbeitungsvorrichtung (3) und die Korrelationsanalysevorrichtung (4) übertragen werden.

7. System für die Risikoüberwachung nach einem der Ansprüche 1 bis 6, **dadurch gekennzeichnet, dass** der Vorhersagebericht, der durch das Berichtsmodul erzeugt wird, es einem System ermöglicht, eine Warnung zu erzeugen, wenn ein Risiko für einen gegebenen Prozess ausgewertet wird.

8. Risikoüberwachungssystem nach einem der Ansprüche 1 bis 7,
   **dadurch gekennzeichnet, dass** der Vorhersagebericht auf der interaktiven Benutzerschnittstelle (5) angezeigt wird, die Schnittstelle umfassend mindestens ein Mittel, das es einem Benutzer oder einem Bediener ermöglicht, den Prozess zu unterbrechen oder weiterlaufen zu lassen, je nachdem, ob eine Warnung ausgegeben wird oder nicht.

9. Verfahren zum Überwachen von Risiken in einem industriellen Prozess einer Produktionskette, die durch ein System gesteuert wird, umfassend mindestens eine Datenbank, die Zeitreihen von Originaldaten aufweist, eine Computerarchitektur, umfassend mindestens einen Prozessor, mindestens einen Speicher für das Abspeichern von Daten und mindestens einen Satz von Modulen, wobei der Satz von Modulen auf dem Prozessor der Computerarchitektur zum Implementieren des Verfahrens ausgeführt wird, umfassend mindestens:

   • Vorverarbeiten (E1) eines Satzes von Originaldaten für jede Zeitreihe zum Produzieren eines Satzes von Volatilitäts-"Proxys";
   • Analysieren von Korrelationen (E2) zwischen den "Proxys" des Satzes von Volatilitäts-"Proxys";
   • Identifizieren (E3) mindestens eines optimalen Modells und optimaler Parameter, die mindestens von dem Satz von Volatilitäts-"Proxys" abhängen, die in dem Originaldatenvorverarbeitungsschritt produziert werden;
   • Berechnen von Vorhersagen (E4) des Satzes der Volatilitäts-"Proxys", die in dem Vorverarbeitungsschritt produziert werden, mittels des optimalen Modells und der optimalen Parameter, die in dem Identifikationsschritt identifiziert werden;
   wobei das Verfahren **dadurch gekennzeichnet ist, dass** das Vorverarbeiten (E1) "Proxys" erzeugt, die eine Variable darstellen, die die Volatilität quantifiziert, die dem Grad der Variation einer Zeitreihe einer Entität entspricht, die durch mindestens einen Sensor ($S_1$, $S_2$, $S_3$) innerhalb des Prozesses gemessen wird, und **dass**:

- das Analysieren (E2) der Korrelationen zwischen den "Proxys" es ermöglicht, die "Proxys" auszuwählen, die für das Identifizieren (E3) des optimalen Modells und der optimalen Parameter verwendet werden sollen;
- das Analysieren der Korrelationen (E3) für jede Zeitreihe mindestens das Empfangen des entsprechenden Satzes von Volatilitäts-"Proxys", der in dem Vorverarbeitungsschritt (E1) berechnet wird, die Auswertung der Korrelationskoeffizienten zwischen den verschiedenen "Proxys" des Satzes von Volatilitäts-"Proxys" und die Aggregation, unter Verwendung einer Metaanalysemethode, der Korrelationskoeffizienten, die für alle Zeitreihen erhalten werden, zum Erhalten einer statistisch aggregierten Messung umfasst;
- das Berechnen der Vorhersagen (E4) des Satzes der Volatilitäts-"Proxys" die Kombination von mindestens einem der Volatilitäts-"Proxys" mit mindestens einem exogenen Parameter umfasst, wobei der exogene Parameter ein Volatilitäts-"Proxy" ist, der in dem Satz von Volatilitäts-"Proxys" enthalten ist,
- der Satz von "Proxys", die aus Daten, die durch die Sensoren (S1, S2, S3) gesammelt werden, durch die Vorverarbeitungsvorrichtung (3) erzeugt werden, den "beobachteten" Werten der Proxys entspricht, wobei das optimale Modell, das durch die Modellidentifikationsvorrichtung (2) erhalten wird, es ermöglicht, die "beobachteten" Werte zu schätzen;
- wobei das Verfahren ferner aufweist:

   - Ausführen eines Modellimplementierungsmoduls (11), das es ermöglicht, die Vorhersagen des Satzes der Volatilitäts-"Proxys" auf der Basis des Satzes der Volatilitäts-"Proxys", die durch die Datenvorverarbeitungsvorrichtung (3) übertragen werden, und des optimalen Modells und der optimalen Parameter zu erzeugen, die durch die Modellidentifikationsvorrichtung (2) übertragen werden, zum Aufzeichnen, in einem Ursprungsdatenspeicher (12), der "beobachteten" Werten zu einem gegebenen Datum der Volatilitäts-"Proxys", die mit mindestens einem Satz von Entitäten verbunden sind, den der Benutzer überwachen möchte;
   - Ausführen eines Fehlermessmoduls (13), um es zu ermöglichen, die Effizienz des Vorhersagemodells auszuwerten, indem die Fehler gemittelt werden, die durch die Differenz zwischen den Vorhersagen des Satzes der Volatilitäts-"Proxys", die mittels des Implementierungsmoduls (11) erhalten werden, und den "beobachteten" Werten des Satzes von Volatilitäts-"Proxys" erhalten werden, die in dem Ursprungsdatenspeicher (12) aufgezeichnet sind;
   - Erzeugen eines Vorhersageberichts, der mindestens Informationen über die Vorhersagen der Volatilitäts-"Proxys", Vorhersagefehler und die aggregierte Messung der Korrelationskoeffizienten aufweist;
   - automatisches Analysieren des Vorhersageberichts;
   - Produzieren einer Warnung durch mindestens einen Alarm (6), wenn der vorhergesagte Fehler größer als ein vorbestimmter Toleranzwert ist;
   - Ausführen eines Satzes von Modulen oder Programmen zum Blockieren des industriellen Prozesses, falls nach der Analyse des Vorhersageberichts ein Risiko festgestellt wird;
   - Übertragen von Blockieranweisungen an ein Steuerungssystem der Produktionskette zum automatischen Blockieren des industriellen Prozesses.

10. Verfahren für die Risikoüberwachung nach Anspruch 9, **dadurch gekennzeichnet, dass** der Originaldatenvorverarbeitungsschritt (E1) mindestens umfasst:

   - Zuteilen von Originaldaten durch Zuweisen fehlender Werte zu den Zeitreihen der Originaldaten;
   - Erzeugen von "Proxys", für jede Zeitreihe, eines Satzes von Volatilitäts-"Proxys" unter Verwendung der zugeteilten Daten.

11. Verfahren für die Risikoüberwachung nach einem der Ansprüche 9 bis 10, **dadurch gekennzeichnet, dass** der Identifikationsschritt (E3) mindestens einen der folgenden Schritte umfasst:

   - Empfangen mindestens einer vorausgewählten Methode für maschinelles Lernen und eines vorausgewählten Auswertungsvorgehens der Methode für maschinelles Lernen, die aus Daten vorausgewählt wird, die durch einen Benutzer über eine interaktive Schnittstelle eingegeben werden;
   - Empfangen, in einem Speicher, von mindestens einem Satz von Volatilitäts-"Proxys", die in dem Vorverarbeitungsschritt (E1) erhalten werden;
   - strukturelles Identifizieren eines optimalen Modells und parametrisches Identifizieren optimaler Parameter unter Verwendung mindestens der vorausgewählten Methode für maschinelles Lernen, mindestens des vorausgewählten Auswertungsvorgehens und des Satzes der Volatilitäts-"Proxys";

12. Verfahren für die Risikoüberwachung nach Anspruch 11,

**dadurch gekennzeichnet, dass** die vorausgewählte Methode für maschinelles Lernen mindestens eine der Methoden eines künstlichen neuronalen Netzes (ANN) und einer Nächste-Nachbarn-Klassifikation (kNN) ist.

13. Verfahren für die Risikoüberwachung nach Anspruch 12, **dadurch gekennzeichnet, dass** das vorausgewählte Auswertungsvorgehen mindestens eine der Analysen durch ein Gleitfenster (RW) und durch einen Gleitursprung (RO) ist, wobei die Analysen Techniken zum Auswerten mindestens der Stabilität der Parameter eines Modells jeweils auf einem Gleitfenster fester Größe oder einem Gleitursprung sind, indem ein Datensatz durchlaufen wird, wobei das Fenster oder der Ursprung um ein vorausgewähltes Inkrement vorwärts verschoben wird.

14. Verfahren für die Risikoüberwachung nach einem der Ansprüche 9 bis 13, **dadurch gekennzeichnet, dass** der Identifikationsschritt (E3) mindestens das Trainieren eines nichtlinearen autoregressiven multivariaten Modells umfasst, um ein optimales Modell zu finden.

15. Verfahren für die Risikoüberwachung nach einem der Ansprüche 9 bis 14, **dadurch gekennzeichnet, dass** das Berechnen der Vorhersagen (E4) der Volatilitäts-"Proxys" mindestens umfasst:

    • Berechnen der Vorhersagen für jede Zeitreihe des entsprechenden Satzes von Volatilitäts-"Proxys" mittels des nichtlinearen autoregressiven multivariaten Modells, das in dem Identifikationsschritt (E3) erhalten wird;
    • Berechnen der Vorhersagefehler über die Vorhersagen des Satzes von Volatilitäts-"Proxys".

16. Verfahren für die Risikoüberwachung nach einem der Ansprüche 9 bis 15, **dadurch gekennzeichnet, dass** die Korrelationskoeffizienten für eine bestimmte Zeitreihe und der entsprechende Satz von Volatilitäts-"Proxys" unter Verwendung der Methode der Pearson-Korrelationsmatrizen ausgewertet werden.

**Claims**

1. System for controlling risks in an industrial process of a production line, the system comprising at least one database (6) which contains at least one set of time series of raw data relating to the process, at least one data preprocessing device (3) for transforming, for each time series, the raw data into a set of volatility "proxies", which is stored and linked to at least one relevant entity of the process, at least one correlation analysis device (4) which is connected to the data preprocessing device (3) to analyze the correlations between the "proxies", at least one model identification device (2) which is connected to the data preprocessing device (3) to produce at least one prediction model which is based on the set of "proxies", the prediction model being used by at least one prediction device (1) which is connected to the data preprocessing device (3) and to the model identification device (2), each of the data preprocessing, model identification, correlation analysis and prediction devices including at least one memory for storing data and at least one module, each module being a program which can be executed by a computer comprising at least one processor for executing the module, the system being **characterized in that**:

    • the preprocessing device (3) generates "proxies" which are representative of a variable that quantifies the volatility which corresponds to the degree of variation in a time series of an entity which is measured by at least one sensor ($S_1$, $S_2$, $S_3$) within the process;

       - the correlation analysis device (4) which is connected to the model identification device (2) selects the "proxies" to be used for the identification of the prediction model on the basis of the comparison of the values of the correlations between the "proxies" and a threshold value, this correlation device (4) comprising at least one correlation "block" module (41) which reads for each set of "proxies" which correspond to a particular time series and are transmitted by the preprocessing device (3), and evaluates the correlation coefficients between the various "proxies" of the set of "proxies", the correlation coefficients being aggregated for all the time series by at least one meta-analysis module (42) which averages the coefficients to produce an aggregated measurement of the correlation coefficients to be recorded,

    • the prediction device (1) calculates, on the basis of the identification model and the set of "proxies", the predictions of the volatility "proxies" by means of at least one combination of one of the volatility "proxies" with at least one exogenous parameter, the exogenous parameter being a volatility "proxy" which is included in the set of volatility "proxies" transmitted by the data preprocessing device (3),
    • the set of "proxies" generated by the preprocessing device (3) from the data collected by the sensors (S1, S2, S3) corresponds to the "observed" values of the proxies, the optimal model obtained by the identification device of the model (2) making it possible to estimate the "observed" values;

• the prediction device (1) comprises at least one model implementation module (11), an original data memory (12) for recording the "observed" values at a particular date of the volatility "proxies" linked to at least one set of entities that the user wishes to control and an error measurement module (13), the execution of the model implementation module (11) making it possible to generate the predictions of the set of the volatility "proxies" on the basis of the set of the volatility "proxies" transmitted by the data preprocessing device (3) and the optimal model and the optimal parameters transmitted by the model identification device (2), the execution of the error measurement module (13) making it possible to evaluate the efficiency of the prediction model by averaging the errors obtained by the difference between the predictions of the set of volatility "proxies" obtained by means of the implementation module (11) and the "observed" values of the set of volatility "proxies" recorded in the original data memory (12);

• the predictions are recorded by a reporting module in the form of a prediction report comprising at least information relating to the predictions of the volatility "proxies", the prediction errors and the aggregated measurement of the correlation coefficients in the memory of the prediction device (1) and used for risk control in the process;

• the system comprises at least one alarm (6) for producing an alert when the predicted error is greater than a predetermined tolerance value, and a stopping device including a set of modules or programs for blocking the industrial process if a risk is detected after automatic analysis of the prediction report, the stopping device connecting, via communication means, to a control system of the production line and transmitting instructions for automatic blocking of the industrial process.

2. Risk control system according to claim 1, **characterized in that** the data preprocessing device (3) comprises at least one imputation module (31) and a "proxy" generation module (32), the executions of which on the processor of the preprocessing device (3) make it possible, respectively, to assign missing values to the time series of the raw data and to generate, for each time series, a set of "proxies" using the imputed data.

3. Risk control system according to either claim 1 or claim 2,
**characterized in that** the correlation device (4) comprises a module for generating a correlation report including the aggregated measurement of the correlation coefficients, at least all time series and the corresponding volatility "proxies", the correlation report being transmitted to the model identification device (2).

4. Risk control system according to any of claims 1 to 3,
**characterized in that** the identification device (2) comprises at least one module for analyzing the correlation report transmitted by the correlation device (4) in order to select, from all the sets of volatility "proxies", volatility "proxies" to be used as input data for the identification of the prediction model.

5. Risk control system according to claim 1, **characterized in that** it comprises an interactive user interface (5) which is connected to the model identification device (2), the interface (5) comprising at least one means for selecting:

• at least one automatic learning method to be used for the prediction from a set of automatic learning methods recorded in the memory of the model identification device (2);
• at least one evaluation procedure, also recorded in the memory of the model identification device (2), to be used for the evaluation of the selected machine learning method;
the automatic training method and the procedure for evaluating the method being transmitted to the model identification device (2).

6. Risk control system according to claim 1, **characterized in that** the model identification device (2) comprises at least one structural identification module (21) and a parametric identification module (22), the executions of which on the model identification device (2) make it possible, respectively, to generate an optimal model and optimal parameters which are linked to the model on the basis of the information transmitted by the interactive user interface (5), the data preprocessing device (3) and the correlation analysis device (4).

7. Risk control system according to any of claims 1 to 6, **characterized in that** the prediction report generated by the reporting module makes it possible for a system to generate an alert when a risk for a particular process is evaluated.

8. Risk control system according to any of claims 1 to 7, **characterized in that** the prediction report is displayed on the interactive user interface (5), the interface comprising at least one means for allowing a user or an operator to interrupt the process or to let it continue depending on whether an alert is issued or not.

9. Method for controlling risks in an industrial process of a production line that is controlled by a system comprising at least one database including time series of raw data, a computing architecture comprising at least one processor, at least one memory for storing data and at least one set of modules, the set of modules being executed on the processor of the computing architecture in order to carry out the method comprising at least:

- preprocessing (E1) a set of raw data, for each time series, to produce a set of volatility "proxies";
- analyzing correlations (E2) between the "proxies" of the set of volatility "proxies";
- identifying (E3) at least one optimal model and parameters that depend at least on the set of volatility "proxies" produced in the step of preprocessing raw data;
- calculating the predictions (E4) of the set of the volatility "proxies" produced in the preprocessing step by means of the optimal model and the optimal parameters identified in the identification step;

the method being **characterized in that** preprocessing (E1) generates "proxies" which are representative of a variable that quantifies the volatility which corresponds to the degree of variation in a time series of an entity which is measured by at least one sensor ($S_1$, $S_2$, $S_3$) within the process, and **in that**:

- analyzing (E2) correlations between the "proxies" makes it possible to select the "proxies" to be used for the identification (E3) of the optimal model and the optimal parameters;
- analyzing correlations (E3) comprises at least receiving, for each time series, the corresponding set of volatility "proxies" calculated in the preprocessing step (E1), evaluating the correlation coefficients between the different "proxies" of the set of volatility "proxies" and aggregating, using a meta-analysis method, the correlation coefficients obtained for all of the time series to obtain a statistically aggregated measurement;
- calculating the predictions (E4) of the set of the volatility "proxies" comprises combining at least one of the volatility "proxies" with at least one exogenous parameter, the exogenous parameter being a volatility "proxy" included in the set of volatility "proxies",
- the set of "proxies" generated by the preprocessing device (3) from the data collected by the sensors (S1, S2, S3) corresponds to the "observed" values of the proxies, the optimal model obtained by the identification device of the model (2) making it possible to estimate the "observed" values;
- the method further comprising:

  - executing a model implementation module (11), which makes it possible to generate the predictions of the set of the volatility "proxies" on the basis of the set of the volatility "proxies" transmitted by the data preprocessing device (3) and the optimal model and the optimal parameters transmitted by the model identification device (2), in order to record, in an original data memory (12), the "observed" values at a particular date of the volatility "proxies" which are linked to at least one set of entities that the user wishes to control;
  - executing an error measurement module (13), which makes it possible to evaluate the efficiency of the prediction model by averaging the errors obtained by the difference between the predictions of the set of the volatility "proxies" obtained by means of the implementation module (11) and the "observed" values of the set of volatility "proxies" recorded in the original data memory (12);
  - generating a prediction report comprising at least information relating to the predictions of the volatility "proxies", the prediction errors and the aggregated measurement of the correlation coefficients;
  - automatically analyzing the prediction report;
  - producing an alert by means of at least one alarm (6) when the predicted error is greater than a predetermined tolerance value;
  - executing a set of modules or programs for blocking the industrial process if a risk is detected after analyzing the prediction report;
  - transmitting blocking instructions to a control system of the production line in order to automatically block the industrial process.

10. Risk control method according to claim 9, **characterized in that** the raw data preprocessing step (E1) comprises at least:

- imputing raw data by assigning missing values to the time series of the raw data;
- generating "proxies", for each time series, of a set of volatility "proxies" using the imputed data.

11. Risk control method according to either claim 9 or claim 10,

**characterized in that** the identification step (E3) at least one of the following steps:

- receiving at least one preselected automatic learning method and a preselected evaluation procedure of the preselected automatic learning method from the data entered by a user via an interactive interface;
- receiving, in a memory, at least one set of volatility "proxies" obtained in the preprocessing step (E1);
- structurally identifying an optimal model and parametrically identifying optimal parameters using at least the preselected automatic learning method, at least the preselected evaluation procedure and the set of the volatility "proxies";

12. Risk control method according to claim 11, **characterized in that** the preselected automatic learning method is at least one from the artificial neural network (ANN) and k-nearest neighbor neural network (kNN) methods.

13. Risk control method according to claim 12, **characterized in that** the preselected evaluation procedure is at least one of the sliding window (RW) and sliding origin (RO) analyses, the analyses being techniques to evaluate at least the stability of the parameters of a model on a sliding window of fixed size or a sliding origin by traversing a set of data, respectively, the window or the origin being moved forward by a preselected increment.

14. Risk control method according to any of claims 9 to 13,
**characterized in that** the identification step (E3) comprises at least training a non-linear autoregressive multivariate model in order to find an optimal model.

15. Risk control method according to any of claims 9 to 14, **characterized in that** calculating predictions (E4) of the volatility "proxies" comprises at least:

- calculating the predictions, for each time series, of the corresponding set of volatility "proxies" by means of the non-linear autoregressive multivariate model obtained in the identification step (E3);
- calculating prediction errors relating to the predictions of the set of volatility "proxies".

16. Risk control method according to any of claims 9 to 15, **characterized in that** the correlation coefficients for a particular time series and the corresponding set of volatility "proxies" are evaluated using the Pearson correlation matrices method.

**Figure 1**

4

Proxies de
la
1$^{ère}$ série
temporelle

Proxies de la
j$^{ième}$ série
temporelle

Proxies de la
N$^{ième}$ série
temporelle

41

41

41

42

Corrélations

Figure 2

Figure 3

Figure 4

**Couche
d'entrée**

**Couche
cachée**

**Couche
de sortie**

Figure 5

| $\sigma^X$ | $\sigma^Y$ | $ANN_X$ | $kNN_X$ | GARCH(1,1) |
|---|---|---|---|---|
| $\sigma^G$ | $\emptyset$ | 0.07 | 0.08 | 1.34 |
| $\sigma^G$ | $\sigma^6$ | 0.06 | 0.11 | 1.34 |
| $\sigma^G$ | $Volume$ | 0.07 | 0.14 | 1.34 |
| $\sigma^G$ | $\sigma^{SD,5}$ | 0.07 | 0.09 | 1.34 |
| $\sigma^G$ | $\sigma^{SD,15}$ | 0.06 | 0.10 | 1.34 |
| $\sigma^G$ | $\sigma^{SD,21}$ | 0.06 | 0.10 | 1.34 |

**Figure 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2172888 A1